# EUROPEAN PATENT APPLICATION

(11) **EP 4 418 738 A1**
(43) Date of publication of application: **21.08.2024**
(21) Application number: 24158208.9
(22) Date of filing: 16.02.2024
(51) Int. Cl.: H04W 36/00, H04W 36/08

(54) **TARGET CELL MULTI-TRP OPERATION IN L1/L2-TRIGGERED MOBILITY**

(30) Priority: 17.02.2023 US 202318170809
(71) Applicant: Nokia Technologies Oy, 02610 Espoo (FI)
(72) Inventor: GOYAL, Sanjay, New Jersey, 07834 (US); KOSKELA, Timo, 90670 Oulu (FI); AWADA, Ahmad, 81249 Munich (DE); KARIMIDEHKORDI, Ali, 81545 München (DE); LADDU, Keeth Saliya Jayasinghe, 02140 Espoo (FI); SPAPIS, Panagiotis, 81475 Munich (DE)
(74) Representative: Script Intellectual Property LLP

(57) **Abstract**

In some embodiments, there is provided a method that includes receiving, by a source distributed unit, a configuration for a target distributed unit, wherein the configuration comprises at least one bandwidth part configuration for at least one transmit and receive point at the targeted distributed unit and a channel state information resource configuration of multiple transmit and receive points; in response to receiving a layer 1 measurement report for the target distributed unit, deciding, by the source distributed unit, to switch to the target distributed unit with a multiple transmit and receive points operation; and sending, by the source distributed unit, a cell switch command to a user equipment to change to the target distributed using a multiple transmit and receive points operation, the cell switch command including a bandwidth part identifier and multiple transmit and receive points beam indications. Related systems, methods, and articles of manufacture are also disclosed.

## Description

### Field

The subject matter described herein relates to wireless mobility.

### Background

In 3GPP, LTM refers to layer 1 (L1)/layer 2 (L2) triggered mobility (which is also referred to as L1/L2 inter-cell mobility). LTM represents mobility enhancements that provides, among other things, a decision about a cell change based on at least L1 measurements (e.g., physical layer measurements), and this decision is made, according to the 3GGP, in the medium access control (MAC) (e.g., layer 2) portion of a gNB-DU. In 5G (also referred to as new radio (NR) for example), the base station (e.g., the next generation Node B, gNB) may be a split or distributed base station that includes a gNB central unit (CU) and one or more gNB distributed units (DUs), which may serve one or more cells. For example, a DU may include one or more transmission reception points (TRPs) to serve one or more corresponding cells. The gNB CU may include non-time-critical functionalities (which could be hosted locally or on the cloud). The gNB-DUs include real-time functionalities such as radio link control (RLC), medium access control (MAC), and physical (PHY) layer functions. The F1 interface provides control (F 1-C) and user (F 1-U) plane connectivity between the CU and DUs. The F1 interface also provides separation between the radio network and transport network layers, while enabling the exchange of UE and non-UE associated information.

### Summary

In some example embodiments, there may be provided a method that includes receiving, by a source distributed unit, a configuration for a target distributed unit, wherein the configuration comprises at least one bandwidth part configuration for at least one transmit and receive point at the targeted distributed unit and a channel state information resource configuration of multiple transmit and receive points; in response to receiving a layer 1 measurement report for the target distributed unit, deciding, by the source distributed unit, to switch to the target distributed unit with a multiple transmit and receive points operation; and sending, by the source distributed unit, a cell switch command to a user equipment to change to the target distributed using a multiple transmit and receive points operation, the cell switch command including a bandwidth part identifier and multiple transmit and receive points beam indications.

In some variations, one or more of the features disclosed herein including the following features can optionally be included in any feasible combination. The channel state information resource configuration of multiple transmit and receive points comprises a configuration of group based beam reporting. The layer 1 measurement report for the target distributed unit comprises group based beam reporting. The configuration is received, from the target distributed unit and/or a control unit, with one or more conditions for selection of the at least one bandwidth part configuration. The source distributed unit, in response to receiving the layer 1 measurement report comprising group based beam reporting for the target distributed unit, selects the bandwidth part configuration for the multiple transmit and receive points and determines multiple transmit and receive points beam indications comprising multiple transmission configuration index states or reference signal identifiers associated with the multiple transmit and receive points at the target distributed unit, and then sends to the user equipment the cell switch command comprising the selected bandwidth part configuration and the determined multiple transmit and receive points beam indications. The beam indications are sent by indicating a beam group received in the layer 1 measurement report. The method further comprises in response to the deciding to switch to the target distribution unit, sending, by the source distributed unit, at least a portion of the layer 1 measurement report to the target distributed unit and/or a control unit; receiving, by the source distribution unit, the bandwidth part identifier and the multiple transmit and receive points beam indications; and/or forwarding, by the source distribution unit, the bandwidth part identifier and the multiple transmit and receive points beam indications to the user equipment. The cell switch command comprises an indication regarding whether there is one or multiple transmission configuration index states in the cell switch command. The cell switch command comprises identifiers of the at least one beam indication from the multiple transmit and receive points beam indications for the at least one transmission or reception with the target distributed unit upon the cell switch. The method further comprises receiving, by the source distributed unit, the configuration for the target distributed unit, wherein the configuration comprises at least the one bandwidth part configuration for the at least one transmit and receive point; selecting, by the source distributed unit, a multiple transmit and receive point configuration comprising at least the bandwidth part identifier, the multiple transmit and receive points beam indications, and an identifier for the beam indication for the first transmission or reception with the target distributed unit after the cell switch, which is in response to receiving a layer 1 measurement report; sharing, by the source distributed unit, the selected multiple transmit and receive point configuration with the target distributed unit; and/or in response to confirmation of the selected multiple transmit and receive point configuration by the target distributed unit, sending, by the source distributed unit, the selected multiple transmit and receive point configuration to the user equipment.

In some other example embodiments, there may be provided a method that includes sending, by a target distributed unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit; receiving, by the target distributed unit, a beam report from the source distributed unit via a control unit, that is sent after a decision to switch to the target distribution unit; in response to receiving the beam report that is sent after the decision to switch to the target distribution unit, selecting, by the target distributed unit, a bandwidth part identifier, multiple transmit and receive points beam indications, and an identifier for the beam indication for the first transmission or reception with the target distributed unit after the cell switch; and sending, by the target distribution unit, the bandwidth part identifier, multiple transmit and receive points beam indications, and a beam indication for the first transmission or reception from the target distributed unit after the cell switch to a source distributed unit via a control unit to enable a cell change to the target distribution unit with multiple transmit and receive points operation for the user equipment.

In some other example embodiments, there may be provided a method that includes receiving, by a control unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit; generating, by the control unit, a radio resource control reconfiguration message comprising measurement reporting configuration comprising the channel state information resource configuration for group based beam reporting of multiple transmit and receive points for the target distributed unit and at least one bandwidth part configuration for at least one transmit and receive point at the target distribution unit; sending, by the control unit, the radio resource control reconfiguration message towards the user equipment; in response to receiving a beam report that is sent after a decision to switch to the target distribution unit, selecting, by the control unit, a multiple transmit and receive point configuration comprising at least of bandwidth part identifier, multiple transmit and receive points beam indications, and an identifier for the beam indication for the first transmission or reception with the target distributed unit after the cell switch; sharing, by the control unit, the selected multiple transmit and receive point configuration with the target distributed unit; and in response to confirmation of the selected multiple transmit and receive point configuration by the target distributed unit, sending, by the control unit, the selected multiple transmit and receive point configuration parameters to the user equipment via a source distributed unit to enable a cell change to the target distribution unit with multiple transmit and receive points operation.

In yet some other example embodiments, there may be provided a method that includes receiving, by a user equipment and from the source distributed unit, a cell switch comprising a bandwidth part identifier and multiple transmit and receive points beam indications comprising multiple transmission configuration index states or reference signal identifiers associated with the multiple transmit and receive points at a target cell; and determining, by the user equipment, a first transmission configuration index state or a first reference signal identifier in the beam indications of the target cell, wherein the first transmission configuration index state or a first quasi co-located source reference signal is used for the first transmission or reception with the target cell, and the second transmission configuration index state or a second reference signal identifier in the beam indication of the target cell indicates the second transmission configuration index state or the second quasi co-located source reference signal are used for second transmission or reception with the target cell.

In some variations, one or more of the features disclosed herein including the following features can optionally be included in any feasible combination. The method may further comprise receiving, by the user equipment and in the cell switch command, identifiers of the beam indications from the multiple transmit and receive points beam indications; and/or based on the identifiers of the beam indications from the multiple transmit and receive points beam indications in the cell switch command, determining, by the user equipment, the beam indications for at least one transmission or reception with the target distributed unit upon the cell switch. The method may further comprise selectin, by the user equipment, the at least one beam indication from the multiple transmit and receive points beam indications provided in the cell switch command, for at least one transmission or reception with the target cell based on reported layer 1 measurements.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### Description of Drawings

In the drawings,
FIG. 1 depicts an example of a process for LTM from a serving cell to a target cell, in accordance with some embodiments;
FIG. 2 depicts an example of a process for enabling multiple transmit receive point (mTRP) operation in a target cell based on a bandwidth part (BWP) configuration selection at the source distributed unit, in accordance with some embodiments;
FIG. 3 depicts another example of a process for enabling multiple transmit receive point (mTRP) operation in a target cell based on a bandwidth part (BWP) configuration selection at the target distributed unit, in accordance with some embodiments;
FIG. 4 depicts another example of a process for enabling multiple transmit receive point (mTRP) operation in a target cell based on a bandwidth part (BWP) configuration selection at the control unit, in accordance with some embodiments;
FIG. 5 depicts an example of a network node, in accordance with some example embodiments; and
FIG. 6 depicts an example of an apparatus, in accordance with some example embodiments.

Like labels are used to refer to same or similar items in the drawings.

### Detailed Description

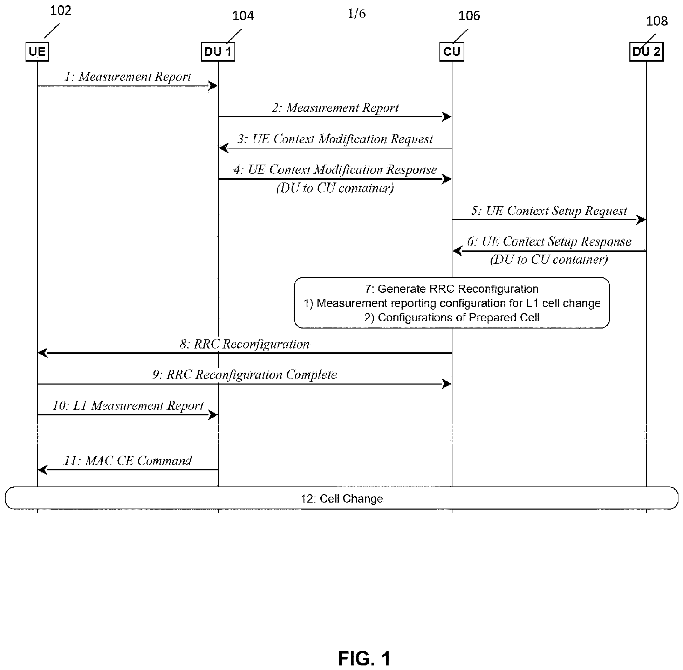

FIG. 1 depicts an example of a process for Layer 1 (L1)/Layer 2 (L2) triggered mobility (LTM) from a serving cell in a DU 1 104 to a target cell in a DU 2 108 (e.g., inter-DU intra-control unit (CU) scenario), although a same or similar process would also be applicable in the case of an intra-DU, intra-CU cell change (e.g., where the DU 1 is the same as DU 2). Referring to FIG. 1 at 1, the UE 102 sends to the DU 1 104 an L3 measurement report including cell quality measurements of serving and neighboring cells, and this measurement report may be forwarded at 2 to the CU 106. For example, the UE may be configured by its serving cell (e.g., DU 1 104) to send a measurement report early, when the UE still has a good connection to the serving cell. Using the reported cell quality measurements, the CU 106 may identify a potential set of target cells to which the UE can be handed over. In this example, the CU identifies candidate target cells and identifies another target DU 2 108 that is controlled by the same CU 106.

At 3, the CU 106 may request the preparation of a target cell controlled by the DU 1 104 by sending a UE Context Modification Request message. At 4, the DU 1 provides to the CU the configuration of the UE 102 in UE Context Modification Response message that includes a container from DU to CU. Like at 3 and 4, the CU 106 and DU 2 108 perform a similar exchange to prepare target cell(s) that are controlled by DU 2 108. Having received the UE configurations for the candidate target cell(s), the CU generates at 7 an RRC Reconfiguration that is sent to the UE at 8. Among other information, the RRC Reconfiguration message includes measurement reporting configuration for L1/2 handover (e.g., configuration on how to report the L1 beam measurements of serving and target cells at 10) and configuration of the prepared candidate cell(s) which the UE needs to execute when it receives a MAC CE command at 11 to change the serving cell (perform handover). After confirming the RRC Reconfiguration to the network at step 9, the UE starts to report (e.g., periodically) the L1 beam measurement of serving and candidate target cells at 10. Upon determining that there is a target candidate cell having a better radio link/beam measurement than the serving cell (e.g., L1-RSRP of target beam measurement greater than L1-RSRP of serving beam measurement plus offset for an amount of time such as time -to-trigger (TTT), the serving cell (e.g., DU 104) sends, at 11, a MAC Control Element (MAC CE) to trigger the cell change to the target cell. At 12, the handover from serving cell to target cell is executed by the UE.

In order to trigger the cell change at FIG. 1 at 11, the serving DU 104 needs to indicate the Transmission Configuration Index (TCI) State which includes the quasi-colocation (QCL) information for receiving on physical downlink control channel (PDCCH) and/or physical downlink shared channel (PDSCH) from the target cell (e.g., downlink (DL) reception) or/and for transmitting on the physical uplink control channel (PUCCH) and/or the physical uplink shared channel (PUSCH) (e.g., uplink transmission). The early timing advance (TA) acquisition with one or more target cells may also be performed before cell change. For early TA acquisition for a target cell, the serving cell may send a PDCCH order that provides the details of the configuration to be used to initiate the TA acquisition procedure with a target cell.

With respect to group based beam reporting and multiple transmit receive point (TRP) operation, for a single Downlink Control Information (DCI) based multi-Physical Downlink Shared Channel (PDSCH) transmissions, a Transmission Configuration Index (TCI) codepoint in a DCI can correspond to 2 TCI states (e.g., a maximum of 2 TRPs are currently supported in 3GPP). For a single DCI spatial domain multiplexing PDSCH scheme, when 2 TCI states are indicated by a TCI code point and the indicated Downlink Modulation Reference Signals ports are from two code division multiplexing groups for example, the first and second TCI states are applied to the first and second indicated code division multiplexing groups, respectively. For single DCI frequency division multiplexing (FDM)/time division multiplexing (TDM) PDSCH schemes, when 2 TCI states are indicated by a TCI code point and corresponding FDM/TDM scheme is pre-configured, the first and second TCI states are applied to the first and second indicated frequency division/time division resource allocations, respectively. For a multi-DCI based multi PDSCH transmission, each DCI schedules a respective PDSCH in which each PDSCH is transmitted from a separate TRP. For multi-DCI based multi PDSCH transmission, if a UE is configured by higher layer parameter PDCCH-Configuration that contains two different values of coresetPoolIndex in ControlResourceSet, the UE may expect to receive multiple PDCCHs scheduling fully and/or partially and/or nonoverlapped PDSCHs in time and frequency domain.

To enable multiple TRP (mTRP) operation, for periodic and semi-persistent channel state information (CSI) Resource Settings, when the UE is configured with groupBasedBeamReporting-r17, the number of CSI Resource Sets configured is S=2 for example, otherwise the number of Channel State Information Reference Signal (CSI-RS) Resource Sets configured is limited to S=1, for example. See, e.g., Section 5.2.1.2 from 3GPP TS 38.214. If the UE is configured with a CSI-ReportConfig with the higher layer parameter reportQuantity set to cri-RSRP, ssb-Index-RSRP, cri-RSRP-Capability[Set]Index or ssb-Index-RSRP-Capability[Set]Index and if the UE is configured with the higher layer parameter groupBasedBeamReporting-r17, the UE is not required to update measurements for more than 64 CSI-RS and/or synchronization signal block (SSB) resources, and the UE reports in a single reporting instance nrofReportedRSgroup, if configured, group(s) of two CRIs (CSI-RS Resource Indicator) or SSBRIs (SS/PBCH Block Resource Indicator) selecting one CSI-RS or SSB from each of the two CSI Resource Sets for the report setting, where CSI-RS and/or SSB resources of each group can be received simultaneously by the UE (see, e.g., Section 5.2.1.4.2 from 3GPP TS 38.214).

In 3GPP Release-16 for example, the intra-cell multi-TRP (mTRP) downlink shared channel transmission is enabled to improve reliability and robustness with both ideal and non-ideal backhaul with further enhancements in Release-17 for other downlink (PDCCH) and uplink channels (e.g., Physical Uplink Control Channel (PUCCH) and the Physical Uplink Shared Channel (PUSCH)), as well as inter-cell scenarios. More recently with Release-18, L1/L2 triggered mobility (LTM), in addition to reduced interruption time, a motivation is to maintain or even improve transmission efficiency and reliability in the process of fast cell switch.

In some embodiments, the subject matter disclosed herein addresses how to reduce the delay for the target cell (or corresponding target DU) to operate in an mTRP operation for the UE. Prior to the subject matter disclosed herein, after a cell change, the UE operates in a single TRP operation within the target cell and then later based on the L1 measurement reports (e.g., group based beam measurement reports) from the UE, the target cell may then trigger an mTRP configuration for the UE. During this time, the UE is not be able to operate in an mTRP operation within the target cell.

In some embodiments, there are disclosed ways to enable an mTRP operation within the target cell (or corresponding target DU) immediately after a cell switch using LTM. In some implementations of the disclosed subject matter, the mTRP configuration with the target cell (or DU) is used immediately after the cell change (or handover) reducing the delay for the target cell to first configure and obtain the appropriate beam measurements and then, based on that, configure an appropriate mTRP operation for the UE.

In some embodiments, the UE may be configured with a target cell (or DU) configuration that contains a bandwidth part (BWP) configuration for an mTRP operation. For example, this configuration may comprise multi-DCI mTRP configuration with a physical downlink control channel (PDCCH) configuration containing CORESETs associated with multiple (which is currently two in Rel-17 but other quantities may be possible as well) CORESET Pool Indices (CORESETPoolIndex). In 3GPP for example, BWPs are used to dynamically adapt the carrier bandwidth and numerology for a UE. BWP enables UE support for multiple services or beams per carrier. For example, a subset of the total cell bandwidth of a cell is referred to as a Bandwidth Part (BWP), so a given UE can be configured to use one or more BWP at a given cell. The CORESET refers to set of physical resources and a set of parameters used to carry PDCCH/DCI. In some embodiments, a target DU (or cell) configuration may include a set of BWP configurations that include (e.g., contain, associated with, and/or the like) one or more mTRP and/or one or more single TRP (sTRP) configurations, in accordance with some embodiments.

In some embodiments, the UE may be further configured with an mTRP beam measurement and reporting for the target cell. For example, the UE may be configured with group based beam reporting (see, e.g., Release (Rel)-17 groupBasedBeamReporting) for the target cell (DU), where the channel measurement resource configuration contains multiple (which is currently, e.g., two in Rel-17 although other quantities may be implemented) CSI resource sets and the CSI report configuration enables the UE to report multiple reference signal (RS) groups in a single reporting instance. Each RS group in a report may include multiple (which is currently, e.g., two in Rel-17 although other quantities may be implemented) CRIs (CSI-RS Resource Indicators) or SSBRIs (SS/PBCH Block Resource Indicator) by selecting one Channel State Information Reference Signal (CSI-RS) or synchronization signal block (SSB) from each of the CSI Resource Sets where CSI-RS and/or SSB resources of each group can be received simultaneously by the UE.

In some embodiments, the target cell (or DU) configuration of group based beam reporting and BWP configuration(s) are shared with the source cell (or DU). After receiving from the UE the beam measurement report(s) (which is, e.g., a Layer 1 report) associated with the target cell (DU) for example, the source DU (or cell) may decide whether an mTRP operation may be enabled within the target cell after the cell switch, and may select an appropriate BWP configuration (e.g., BWP ID, such as the- initial downlink BWP ID) from the set of BWP configurations associated with the candidate target cell (or DU). If the beam reporting of the target cell (or DU) from the UE shows that the UE can listen to beam 1 (e.g., associated RS: RS 1) from the first CSI resource set and to beam 2 (e.g., associated RS: RS 2) from the second CSI resource set simultaneously with good link qualities (e.g., reference signal received power (RSRP) measurement greater than (>) a threshold) for example, the source DU may select a BWP that has a PDCCH configuration with CORESET 1 with CORESET pool index 0 and CORESET 2 with CORESET pool index 1 and at least one of the TCI states of CORESET 1 (and/or CORESET 2) has at least one QCL RS as RS 1 (RS 2). To enable the source DU to select the appropriate mTRP BWP configuration, the target DU shares with the source DU (e.g., via CU and F1 interface), the BWP configurations and corresponding configuration (e.g., conditions) for BWP configuration (e.g. CORESET pool) selection. For the example, the condition may comprise comparing the L1 measurements against configured thresholds. After determining the appropriate BWP configuration, the source DU may share the selected BWP configuration with the target DU. In response to the selected BWP configuration, the target DU may send a positive acknowledgment to the source DU. In some embodiments, when the target DU sends a negative acknowledgment to the source DU in response to the selected BWP configuration (e.g., BWP ID), the target DU may also send an alternate (e.g., preferred) BWP configuration along with the negative acknowledgment. After receiving a negative acknowledge along with an alternate BWP identifier, the source DU may use the alternate BWP configuration identifier to replace its earlier selected BWP configuration identifier.

In some embodiments, after receiving the beam (e.g., Layer 1) measurement report(s) associated with the target cell (or DU) from the UE, the source DU may share the report(s) with the relevant target cell or DU (e.g., via the CU). Alternatively, or additionally, the source DU may only forward the mTRP relevant (e.g., group based beam report) reports of candidate cell(s) (that are above a threshold, such as a pre-coordinated threshold). Alternatively, or additionally, after receiving the report(s) from the source DU, the candidate target cell may select an appropriate BWP configuration and may send that information (e.g., BWP ID, such as initial downlink BWP ID) to the source DU.

In some embodiments, after receiving the beam (e.g., Layer 1) measurement report(s) associated with the target DU (or cell) from the UE, the source DU may share the report(s) with the CU. Alternatively, or additionally, the source DU may only forward the mTRP relevant (e.g., group based beam report) reports of target cell(s). And, after receiving the report(s) from the source DU, the CU may select an appropriate BWP configuration. After determining the appropriate BWP configuration, the CU may share the selected BWP configuration with the target DU. In response to the selected BWP configuration, the target DU may send a positive acknowledgment to the CU. In some embodiments, when the target DU sends a negative acknowledgment to the CU in response to the selected BWP configuration (e.g., BWP ID), the target DU may also send an alternate BWP configuration along with the negative acknowledgment. After receiving a negative acknowledge along with an alternate (e.g., preferred) BWP configuration identifier, the CU may use the alternate BWP configuration identifier to replace its earlier selected BWP configuration identifier, and may send that info (e.g., BWP ID, such as an initial downlink BWP ID) to the source DU.

In some embodiments, the source DU (or CU) may send the selected (or received) BWP configuration info (e.g., BWP ID, such as the initial downlink BWP ID) to the UE in the cell switch command.

With respect to the mTRP beam indication, the beam indication may include multiple TCI states or RS IDs associated with multiple TRPs that the UE may use for initial QCL assumption for downlink/uplink reception/transmission with the target cell after the cell switch, in accordance with some embodiments. Alternatively, or additionally, when the source DU/CU forwards the L1 measurement reports to the candidate target DU/CU, the candidate target DU may also determine appropriate beam indication for the UE and may send it to the source DU together with the selected BWP information (e.g., BWP ID). If the source DU (and/or CU) determines the selection of mTRP beam indication, the source DU and/or CU) may share the selected mTRP beam indication with the target DU. The target DU may send an ACK (acknowledgement) or NACK (negative acknowledgement) with an alternate mTRP beam indication in response to source DU/CU. This signaling of mTRP beam indication may be combined with the signaling to indicate selected BWP information.

In some embodiments, the cell switch command may have a field to indicate the UE whether there is one or multiple TCI states present in the cell switch command. For example, if multiple transmission configuration index (TCI) states are present in the cell switch command, the group selected (from the reported group based L1 measurements) to determine the mTRP operation may also be given in the cell switch command. In case of the target DU based decision of mTRP configuration, the target DU may send the information of selected group to the source DU. The UE may assume the first TCI state in the cell switch command maps to the first indicated TCI state associated with the first L1 measurement reported in the selected group and second to the second indicated TCI state associated with the second L 1 measurement reported in the group and so on state after handover.

With respect to the quasi-colocation (QCL) assumption for the first uplink message, in case of RACH-less cell switch, for the first uplink message after the cell switch (e.g., the RRC Reconfiguration Complete message), the UE may be configured with UL grants (e.g., periodic UL resources) associated with one or more TRPs. Alternatively, or additionally, the configuration of UL grants may be a part of the candidate cell configuration given to the UE during the handover preparation phase. Alternatively, or additionally, the configuration of UL grants may be given separately (e.g., separate from the candidate cell configuration) to the UE (e.g., in the cell switch command). Alternatively, or additionally, the target DU may provide the UL grant configuration to the source DU. In case of multiple TCI states as the beam indication, the UE may be informed or indicated regarding which TCI state(s) to be used to derive the QCL assumption for the first UL message, in accordance with some embodiments. Alternatively, or additionally, this indication of TCI state(s) may be a part of the candidate cell configuration (e.g., within the BWP configuration) given to the UE during the handover preparation phase. Alternatively, or additionally, this indication may be given separately (e.g., separate from the candidate cell configuration) to the UE, e.g., in the cell switch command. Alternatively, or additionally, the target DU may provide the indication to the source DU. Alternatively, or additionally, the UE may be configured to autonomously select one TCI state based on the L1 measurements. For example, the UE may select a TCI state for which the reported L1 measurement is higher than the others in the reported group.

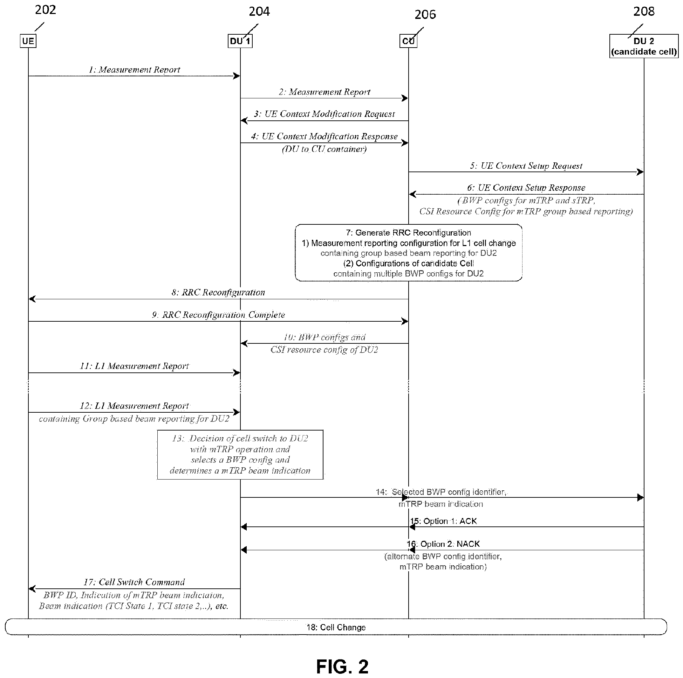

FIG. 2 depicts an example of a process for enabling mTRP operation in a target cell, such as target DU 2 21, with a source DU 1 204 based BWP configuration selection, in accordance with some embodiments. FIG. 2 depicts a UE 202, a source DU 1 204, a CU 208, and a target DU 210. Based on group based beam reporting from the UE, the source DU 204 determines an appropriate BWP configuration and beam indication of the target cell (or DU). FIG. 2 at 1-5 are the same or similar as noted above with respect to FIG. 1.

At 6, the target DU 210 responds with a UE context setup response message including BWP configuration(s) for mTRP and/or sTRP and CSI resource configuration(s) for mTRP group based reporting, in accordance with some embodiments. For example, the target DU 210 may provide, at 6, a target cell (or DU) configuration that includes a bandwidth part (BWP) configuration for an mTRP operation. This configuration may comprise multi-DCI mTRP configuration with a physical downlink control channel (PDCCH) configuration containing CORESETs associated with multiple CORESET Pool Indices. The target cell (or DU) configuration may include a set of BWP configurations that include one or more mTRP and/or one or more single TRP (sTRP) configurations, in accordance with some embodiments.

At 7, the CU may generate an RRC reconfiguration message, in accordance with some embodiments. The CU also generates a measurement reporting configuration for L1 cell change (which further includes the group based beam reporting for the target DU 210) and configurations(s) of the target DU (or cell(s)) 210 (which further includes the multiple BWP configuration fort the target DU (or cell). At 8 the UE sends an RRC configuration message, which is confirmed by the UE at 9.

At 10, the CU 208 sends to the source DU 204 the group based beam reporting configuration for the target DU 210 and the multiple BWP configuration for the target DU (or cell), in accordance with some embodiments.

At 11, the UE starts to report to the source DU 204 the L1 beam measurement of source cell (or DU) 204 and target cells (or DU) 210. At 12, the L1 measurement report includes group based beam reporting for the target DU 210, in accordance with some embodiments.

At 13, the source DU 204 makes a cell switch decision to the target DU including mTRP operation and selects a mTRP BWP configuration and determines a mTRP beam indication, in accordance with some embodiments. At 14, the source DU sends the selected mTRP BWP configuration and the mTRP beam indication to the target DU 208, which acknowledges at 15 or responds with an alternative proposal at 16.

At 17, the source DU 204 sends a cell switch command to the UE 202 wherein the cell switch command includes a BWP ID for the target DU 2 210, an indication of mTRP beam indication, in accordance with some embodiments. At 18, the cell change proceeds.

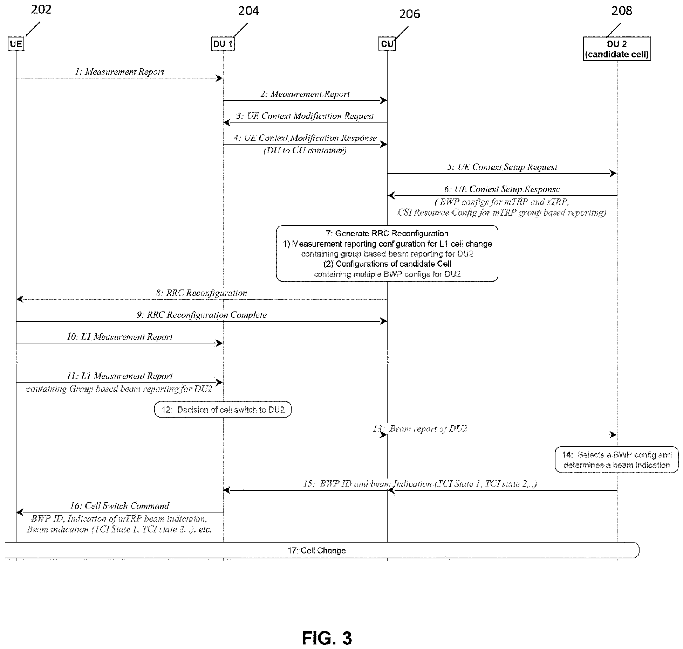

FIG. 3 depicts an example of a process for enabling mTRP operation in a target cell, such as target DU 2 210, based BWP configuration selection, in accordance with some embodiments. FIG. 3 depicts a UE 202, a source DU 1 204, a CU 208, and a target DU 210. In the example of FIG. 3, the source DU 204 forwards, at 13, the group based beam reporting to the relevant target DU 210 and then target DU selects, at 14, an appropriate BWP configuration and beam indication that is then sent (at 15-16) to the UE via the source DU.

Referring to FIG. 3, 1-9 are the same or similar to 1-9 of FIG. 2 above. At 10, the UE starts to report to the source DU 204 the L1 beam measurement of source cell (or DU) 204 and target cells (or DU) 210. At 11, the L1 measurement report includes group based beam reporting for the target DU 210, in accordance with some embodiments. At 12, the source DU 204 makes a decision to switch to the target DU 210 based on the received group based beam reporting associated with the target DU 210. At 13, the source DU 204 forwards the group based beam reporting to the target DU 210 (which is via the CU). At 14, the target DU selects a BWP configuration and beam indication that is then sent (at 15-16) to the UE via the source DU. As noted, the beam indication may include multiple TCI states or RS IDs associated with multiple TRPs that the UE may use for initial QCL assumption for downlink/uplink reception/transmission with the target cell after the cell switch, in accordance with some embodiments.

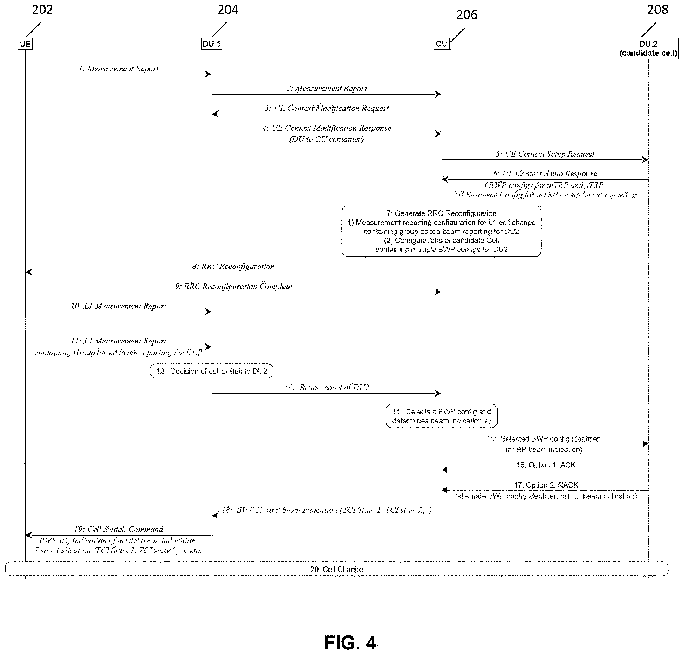

FIG. 4 depicts an example of a process for enabling mTRP operation in a target cell, such as target DU 2 210, with CU based BWP configuration selection, in accordance with some embodiments. FIG. 4 depicts a UE 202, a source DU 1 204, a CU 208, and a target DU 210. At FIG. 4, 1-12 are the same or similar as noted above with respect to FIG. 3.

At FIG. 4 at 13, the source DU 204 forwards to the CU 20 the group based beam reporting associated with the target DU 210, in accordance with some embodiments. At 14, the CU selects a BWP configuration and beam indication. At 15, the CU sends the selected mTRP BWP configuration and the mTRP beam indication to the target DU 208, which acknowledges at 16 or responds with an alternative proposal at 17. At 18, the CU sends the BWP configuration and beam indication to the source DU, which then includes BWP configuration and beam indication in the cell switch command sent at 19 to the UE.

The above solutions and examples are presented for the intra-CU inter-DU scenarios, but are applicable for inter-CU scenarios as well. In case of the target DU belongs to a different CU, the communication between the target DU and the source DU may be via their associated CUs (target DU à target CU à source CU à source DU, or source DU à source CU à target CU à target DU).

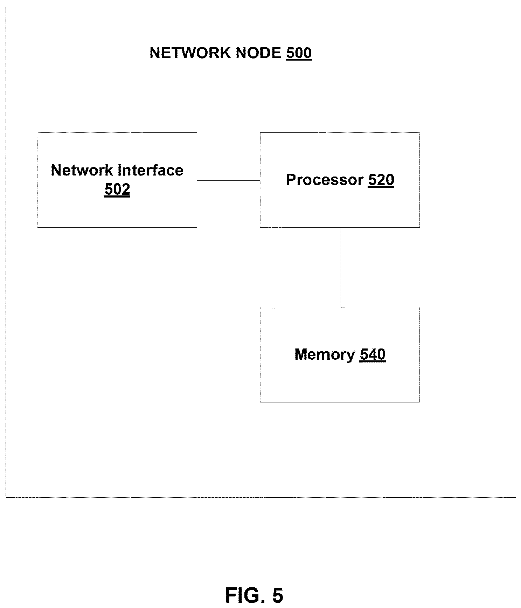

FIG. 5 depicts a block diagram of a network node 600, in accordance with some example embodiments. The network node 500 may comprise or be comprised in one or more network side nodes or functions (e.g., gNB, eNB, DU, TRPs, CU, and/or the like).

The network node 500 may include a network interface 502, a processor 520, and a memory 504, in accordance with some example embodiments. The network interface 502 may include wired and/or wireless transceivers to enable access other nodes including base stations, other network nodes, the Internet, other networks, and/or other nodes. The memory 504 may comprise volatile and/or non-volatile memory including program code, which when executed by at least one processor 520 provides, among other things, the processes disclosed herein with respect to the trainer entity, verifier, and/or the like.

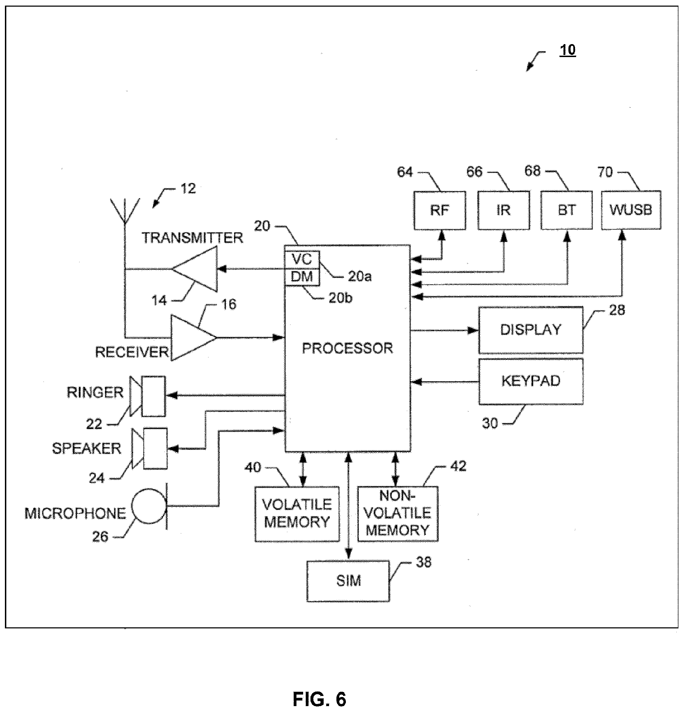

FIG. 6 illustrates a block diagram of an apparatus 10, in accordance with some example embodiments. The apparatus 10 may comprise or be comprised in a user equipment, such as user equipment (e.g., user entity, PRUs, etc.). In general, the various embodiments of the user equipment 204 can include cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions, in addition for vehicles such as autos and/or truck and aerial vehicles such as manned or unmanned aerial vehicle and as well as portable units or terminals that incorporate combinations of such functions. The user equipment may comprise or be comprised in an IoT device, an Industrial IoT (IIoT) device, and/or the like. In the case of an IoT device or IToT device, the UE may be configured to operate with less resources (in terms of for example power, processing speed, memory, and the like) when compared to a smartphone, for example.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signalling via electrical leads to the transmitter and receiver. Likewise, processor 20 may be configured to control other elements of apparatus 10 by effecting control signalling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 6 as a single processor, in some example embodiments the processor 20 may comprise a plurality of processors or processing cores.

The apparatus 10 may be capable of operating with one or more air interface standards, communication protocols, modulation types, access types, and/or the like. Signals sent and received by the processor 20 may include signalling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, sixth-generation (6G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 6, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth^{™} (BT) transceiver 68 operating using Bluetooth^{™} wireless technology, a wireless universal serial bus (USB) transceiver 70, a Bluetooth^{™} Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, U-SIM, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to the provide operations disclosed herein with respect to the UE, such as the user entity.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiments, the application logic, software or an instruction set is maintained on any one of various conventional computer-readable media. In the context of this document, a "computer-readable storage medium" may be any non-transitory media that can contain, store, communicate, propagate or transport the instructions for use by or in connection with an instruction execution system, apparatus, or device, such as a computer or data processor circuitry; computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may include reduce the handover interruption time and the UE can start operating in an mTRP setting immediately after the handover.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a highlevel procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

In some example embodiments, there is provided a method that includes receiving, by a source distributed unit, a configuration for a target distributed unit, wherein the configuration comprises at least one bandwidth part configuration for at least one transmit and receive point at the targeted distributed unit and a channel state information resource configuration of multiple transmit and receive points; in response to receiving a layer 1 measurement report for the target distributed unit, deciding, by the source distributed unit, to switch to the target distributed unit with a multiple transmit and receive points operation; and sending, by the source distributed unit, a cell switch command to a user equipment to change to the target distributed using a multiple transmit and receive points operation, the cell switch command including a bandwidth part identifier and multiple transmit and receive points beam indications. Related systems, methods, and articles of manufacture are also disclosed.

Further example aspects and embodiments are contained in the following numbered paragraphs:
1. A method comprising:
   receiving, by a source distributed unit, a configuration for a target distributed unit, wherein the configuration comprises at least one bandwidth part configuration for at least one transmit and receive point at the targeted distributed unit and a channel state information resource configuration of multiple transmit and receive points;
   in response to receiving a layer 1 measurement report for the target distributed unit, deciding, by the source distributed unit, to switch to the target distributed unit with a multiple transmit and receive points operation; and
   sending, by the source distributed unit, a cell switch command to a user equipment to change to the target distributed using a multiple transmit and receive points operation, the cell switch command including a bandwidth part identifier and multiple transmit and receive points beam indications.
2. The method of paragraph 1, wherein the channel state information resource configuration of multiple transmit and receive points comprises a configuration of group based beam reporting.
3. The method of paragraph 1, wherein the layer 1 measurement report for the target distributed unit comprises group based beam reporting.
4. The method of paragraph 1, wherein the configuration is received, from the target distributed unit and/or a control unit, with one or more conditions for selection of the at least one bandwidth part configuration.
5. The method of paragraph 1, wherein the source distributed unit, in response to receiving the layer 1 measurement report comprising group based beam reporting for the target distributed unit, selects the bandwidth part configuration for the multiple transmit and receive points and determines multiple transmit and receive points beam indications comprising multiple transmission configuration index states or reference signal identifiers associated with the multiple transmit and receive points at the target distributed unit, and then sends to the user equipment the cell switch command comprising the selected bandwidth part configuration and the determined multiple transmit and receive points beam indications.
6. The method of paragraph 1, wherein the beam indications are sent by indicating a beam group received in the layer 1 measurement report.
7. The method of paragraph 1 further comprising:
   in response to the deciding to switch to the target distribution unit, sending, by the source distributed unit, at least a portion of the layer 1 measurement report to the target distributed unit and/or a control unit;
   receiving, by the source distribution unit, the bandwidth part identifier and the multiple transmit and receive points beam indications; and
   forwarding, by the source distribution unit, the bandwidth part identifier and the multiple transmit and receive points beam indications to the user equipment.
8. The method of paragraph 1, wherein the cell switch command comprises an indication regarding whether there is one or multiple transmission configuration index states in the cell switch command.
9. The method of paragraph 1, wherein the cell switch command comprises identifiers of the at least one beam indication from the multiple transmit and receive points beam indications for the at least one transmission or reception with the target distributed unit upon the cell switch.
10. The method of paragraph 1 further comprising:
   receiving, by the source distributed unit, the configuration for the target distributed unit, wherein the configuration comprises at least the one bandwidth part configuration for the at least one transmit and receive point;
   selecting, by the source distributed unit, a multiple transmit and receive point configuration comprising at least the bandwidth part identifier, the multiple transmit and receive points beam indications, and an identifier for the beam indication for the first transmission or reception with the target distributed unit after the cell switch, which is in response to receiving a layer 1 measurement report;
   sharing, by the source distributed unit, the selected multiple transmit and receive point configuration with the target distributed unit; and
   in response to confirmation of the selected multiple transmit and receive point configuration by the target distributed unit, sending, by the source distributed unit, the selected multiple transmit and receive point configuration to the user equipment.
11. A method comprising:
   sending, by a target distributed unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
   receiving, by the target distributed unit, a beam report from the source distributed unit via a control unit, that is sent after a decision to switch to the target distribution unit;
   in response to receiving the beam report that is sent after the decision to switch to the target distribution unit, selecting, by the target distributed unit, a bandwidth part identifier, multiple transmit and receive points beam indications, and an identifier for the beam indication for the first transmission or reception with the target distributed unit after the cell switch; and
   sending, by the target distribution unit, the bandwidth part identifier, multiple transmit and receive points beam indications, and a beam indication for the first transmission or reception from the target distributed unit after the cell switch to a source distributed unit via a control unit to enable a cell change to the target distribution unit with multiple transmit and receive points operation for the user equipment.
12. A method comprising:
   receiving, by a control unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
   generating, by the control unit, a radio resource control reconfiguration message comprising measurement reporting configuration comprising the channel state information resource configuration for group based beam reporting of multiple transmit and receive points for the target distributed unit and at least one bandwidth part configuration for at least one transmit and receive point at the target distribution unit;
   sending, by the control unit, the radio resource control reconfiguration message towards the user equipment;
   in response to receiving a beam report that is sent after a decision to switch to the target distribution unit, selecting, by the control unit, a multiple transmit and receive point configuration comprising at least of bandwidth part identifier, multiple transmit and receive points beam indications, and an identifier for the beam indication for the first transmission or reception with the target distributed unit after the cell switch;
   sharing, by the control unit, the selected multiple transmit and receive point configuration with the target distributed unit; and
   in response to confirmation of the selected multiple transmit and receive point configuration by the target distributed unit, sending, by the control unit, the selected multiple transmit and receive point configuration parameters to the user equipment via a source distributed unit to enable a cell change to the target distribution unit with multiple transmit and receive points operation.
13. A method comprising:
   receiving, by a user equipment and from the source distributed unit, a cell switch comprising a bandwidth part identifier and multiple transmit and receive points beam indications comprising multiple transmission configuration index states or reference signal identifiers associated with the multiple transmit and receive points at a target cell; and
   determining, by the user equipment, a first transmission configuration index state or a first reference signal identifier in the beam indications of the target cell, wherein the first transmission configuration index state or a first quasi co-located source reference signal is used for the first transmission or reception with the target cell, and the second transmission configuration index state or a second reference signal identifier in the beam indication of the target cell indicates the second transmission configuration index state or the second quasi co-located source reference signal are used for second transmission or reception with the target cell.
14. The method of paragraph 13, further comprising:
   receiving, by the user equipment and in the cell switch command, identifiers of the beam indications from the multiple transmit and receive points beam indications; and
   based on the identifiers of the beam indications from the multiple transmit and receive points beam indications in the cell switch command, determining, by the user equipment, the beam indications for at least one transmission or reception with the target distributed unit upon the cell switch.
15. The method of paragraph 13, further comprising:
   selecting, by the user equipment, the at least one beam indication from the multiple transmit and receive points beam indications provided in the cell switch command, for at least one transmission or reception with the target cell based on reported layer 1 measurements.
16. An apparatus comprising:
   at least one processor;
   at least one memory including program code which when executed by the at least one processor causes the apparatus to at least:
      receive a configuration for a target distributed unit, wherein the configuration comprises at least one bandwidth part configuration for at least one transmit and receive point at the targeted distributed unit and a channel state information resource configuration of multiple transmit and receive points;
      in response to receiving a layer 1 measurement report for the target distributed unit, decide to switch to the target distributed unit with a multiple transmit and receive points operation; and
      send a cell switch command to a user equipment to change to the target distributed using a multiple transmit and receive points operation, the cell switch command including a bandwidth part identifier and multiple transmit and receive points beam indications.
17. The apparatus of paragraph 16, wherein the channel state information resource configuration of multiple transmit and receive points comprises a configuration of group based beam reporting.
18. The apparatus of any of paragraphs 16-17, wherein the layer 1 measurement report for the target distributed unit comprises group based beam reporting.
19. The apparatus of any of paragraphs 16-18, wherein the configuration is received, from the target distributed unit and/or a control unit, with one or more conditions for selection of the at least one bandwidth part configuration.
20. The apparatus of any of paragraphs 16-19, wherein the apparatus, in response to receiving the layer 1 measurement report comprising group based beam reporting for the target distributed unit, selects the bandwidth part configuration for the multiple transmit and receive points and determines multiple transmit and receive points beam indications comprising multiple transmission configuration index states or reference signal identifiers associated with the multiple transmit and receive points at the target distributed unit, and then sends to the user equipment the cell switch command comprising the selected bandwidth part configuration and the determined multiple transmit and receive points beam indications.
21. The apparatus of any of paragraphs 16-20, wherein the beam indications are sent by indicating a beam group received in the layer 1 measurement report.
22. The apparatus of any of paragraphs 16-22, wherein the apparatus is further caused to in response to the deciding to switch to the target distribution unit, send at least a portion of the layer 1 measurement report to the target distributed unit and/or a control unit; receive the bandwidth part identifier and the multiple transmit and receive points beam indications; and forward the bandwidth part identifier and the multiple transmit and receive points beam indications to the user equipment.
23. The apparatus of any of paragraphs 16-22, wherein the cell switch command comprises an indication regarding whether there is one or multiple transmission configuration index states in the cell switch command.
24. The apparatus of any of paragraphs 16-23, wherein the cell switch command comprises identifiers of the at least one beam indication from the multiple transmit and receive points beam indications for the at least one transmission or reception with the target distributed unit upon the cell switch.
25. The apparatus of any of paragraphs 16-24, wherein the apparatus is further caused to receive the configuration for the target distributed unit, wherein the configuration comprises at least the one bandwidth part configuration for the at least one transmit and receive point; select a multiple transmit and receive point configuration comprising at least the bandwidth part identifier, the multiple transmit and receive points beam indications, and an identifier for the beam indication for the first transmission or reception with the target distributed unit after the cell switch, which is in response to receiving a layer 1 measurement report; share the selected multiple transmit and receive point configuration with the target distributed unit; and in response to confirmation of the selected multiple transmit and receive point configuration by the target distributed unit, send the selected multiple transmit and receive point configuration to the user equipment.
26. The apparatus of any of paragraphs 16-25, wherein the apparatus comprises or is comprised in a source distributed unit.
27. An apparatus comprising:
   at least one processor;
   at least one memory including program code which when executed by the at least one processor causes the apparatus to at least:
      send a context setup for a user equipment, wherein the context setup includes at least one bandwidth part configuration for at least one transmit and receive point at the apparatus and a channel state information resource configuration for group based beam reporting of multiple transmit and receive points for the apparatus;
      receive a beam report from the source distributed unit via a control unit, that is sent after a decision to switch to the target distribution unit;
      in response to receiving the beam report that is sent after the decision to switch to the target distribution unit, select a bandwidth part identifier, multiple transmit and receive points beam indications, and an identifier for the beam indication for the first transmission or reception with the apparatus after the cell switch; and
      send the bandwidth part identifier, multiple transmit and receive points beam indications, and a beam indication for the first transmission or reception from the apparatus after the cell switch to a source distributed unit via a control unit to enable a cell change to the target distribution unit with multiple transmit and receive points operation for the user equipment.
28. The apparatus paragraph 27, wherein the apparatus comprises or is comprised in a target distributed unit.
29. An apparatus comprising:
   at least one processor;
   at least one memory including program code which when executed by the at least one processor causes the apparatus to at least:
      receive a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
      generate a radio resource control reconfiguration message comprising measurement reporting configuration comprising the channel state information resource configuration for group based beam reporting of multiple transmit and receive points for the target distributed unit and at least one bandwidth part configuration for at least one transmit and receive point at the target distribution unit;
      send the radio resource control reconfiguration message towards the user equipment;
      in response to receiving a beam report that is sent after a decision to switch to the target distribution unit, select a multiple transmit and receive point configuration comprising at least of bandwidth part identifier, multiple transmit and receive points beam indications, and an identifier for the beam indication for the first transmission or reception with the target distributed unit after the cell switch;
      share the selected multiple transmit and receive point configuration with the target distributed unit; and
      in response to confirmation of the selected multiple transmit and receive point configuration by the target distributed unit, send the selected multiple transmit and receive point configuration parameters to the user equipment via a source distributed unit to enable a cell change to the target distribution unit with multiple transmit and receive points operation.
30. The apparatus paragraph 29, wherein the apparatus comprises or is comprised in a control unit.
31. An apparatus comprising:
   at least one processor;
   at least one memory including program code which when executed by the at least one processor causes the apparatus to at least:
      receive, from the source distributed unit, a cell switch comprising a bandwidth part identifier and multiple transmit and receive points beam indications comprising multiple transmission configuration index states or reference signal identifiers associated with the multiple transmit and receive points at a target cell; and
      determine a first transmission configuration index state or a first reference signal identifier in the beam indications of the target cell, wherein the first transmission configuration index state or a first quasi co-located source reference signal is used for the first transmission or reception with the target cell, and the second transmission configuration index state or a second reference signal identifier in the beam indication of the target cell indicates the second transmission configuration index state or the second quasi co-located source reference signal are used for second transmission or reception with the target cell.
32. The apparatus of paragraph 31, wherein the apparatus is further caused to at least receive, in the cell switch command, identifiers of the beam indications from the multiple transmit and receive points beam indications; and based on the identifiers of the beam indications from the multiple transmit and receive points beam indications in the cell switch command, determine the beam indications for at least one transmission or reception with the target distributed unit upon the cell switch.
33. The apparatus of any of paragraphs 31-32, wherein the apparatus is further caused to at least select the at least one beam indication from the multiple transmit and receive points beam indications provided in the cell switch command, for at least one transmission or reception with the target cell based on reported layer 1 measurements.
34. The apparatus of any of paragraphs 31-33, wherein the apparatus comprises or is comprised in a user equipment.
35. A non-transitory computer readable storage medium including computer code, which when executed by at least one processor, causes operations comprising:
   receiving, by a source distributed unit, a configuration for a target distributed unit, wherein the configuration comprises at least one bandwidth part configuration for at least one transmit and receive point at the targeted distributed unit and a channel state information resource configuration of multiple transmit and receive points;
   in response to receiving a layer 1 measurement report for the target distributed unit, deciding, by the source distributed unit, to switch to the target distributed unit with a multiple transmit and receive points operation; and
   sending, by the source distributed unit, a cell switch command to a user equipment to change to the target distributed using a multiple transmit and receive points operation, the cell switch command including a bandwidth part identifier and multiple transmit and receive points beam indications.
36. A non-transitory computer readable storage medium including computer code, which when executed by at least one processor, causes operations comprising:
   sending, by a target distributed unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
   receiving, by the target distributed unit, a beam report from the source distributed unit via a control unit, that is sent after a decision to switch to the target distribution unit;
   in response to receiving the beam report that is sent after the decision to switch to the target distribution unit, selecting, by the target distributed unit, a bandwidth part identifier, multiple transmit and receive points beam indications, and an identifier for the beam indication for the first transmission or reception with the target distributed unit after the cell switch; and
   sending, by the target distribution unit, the bandwidth part identifier, multiple transmit and receive points beam indications, and a beam indication for the first transmission or reception from the target distributed unit after the cell switch to a source distributed unit via a control unit to enable a cell change to the target distribution unit with multiple transmit and receive points operation for the user equipment.
37. A non-transitory computer readable storage medium including computer code, which when executed by at least one processor, causes operations comprising:
   receiving, by a control unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
   generating, by the control unit, a radio resource control reconfiguration message comprising measurement reporting configuration comprising the channel state information resource configuration for group based beam reporting of multiple transmit and receive points for the target distributed unit and at least one bandwidth part configuration for at least one transmit and receive point at the target distribution unit;
   sending, by the control unit, the radio resource control reconfiguration message towards the user equipment;
   in response to receiving a beam report that is sent after a decision to switch to the target distribution unit, selecting, by the control unit, a multiple transmit and receive point configuration comprising at least of bandwidth part identifier, multiple transmit and receive points beam indications, and an identifier for the beam indication for the first transmission or reception with the target distributed unit after the cell switch;
   sharing, by the control unit, the selected multiple transmit and receive point configuration with the target distributed unit; and
   in response to confirmation of the selected multiple transmit and receive point configuration by the target distributed unit, sending, by the control unit, the selected multiple transmit and receive point configuration parameters to the user equipment via a source distributed unit to enable a cell change to the target distribution unit with multiple transmit and receive points operation.
38. A non-transitory computer readable storage medium including computer code, which when executed by at least one processor, causes operations comprising:
   receiving, by a user equipment and from the source distributed unit, a cell switch comprising a bandwidth part identifier and multiple transmit and receive points beam indications comprising multiple transmission configuration index states or reference signal identifiers associated with the multiple transmit and receive points at a target cell; and
   determining, by the user equipment, a first transmission configuration index state or a first reference signal identifier in the beam indications of the target cell, wherein the first transmission configuration index state or a first quasi co-located source reference signal is used for the first transmission or reception with the target cell, and the second transmission configuration index state or a second reference signal identifier in the beam indication of the target cell indicates the second transmission configuration index state or the second quasi co-located source reference signal are used for second transmission or reception with the target cell.
39. An apparatus comprising:
   means for receiving, by a source distributed unit, a configuration for a target distributed unit, wherein the configuration comprises at least one bandwidth part configuration for at least one transmit and receive point at the targeted distributed unit and a channel state information resource configuration of multiple transmit and receive points;
   in response to receiving a layer 1 measurement report for the target distributed unit, means for deciding, by the source distributed unit, to switch to the target distributed unit with a multiple transmit and receive points operation;
   means for sending, by the source distributed unit, a cell switch command to a user equipment to change to the target distributed using a multiple transmit and receive points operation, the cell switch command including a bandwidth part identifier and multiple transmit and receive points beam indications.
40. The apparatus of paragraph 39 further comprising means for performing any of the functions recited in paragraphs 2-10.
41. An apparatus comprising:
   means for sending, by a target distributed unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
   means for receiving, by the target distributed unit, a beam report from the source distributed unit via a control unit, that is sent after a decision to switch to the target distribution unit;
   in response to receiving the beam report that is sent after the decision to switch to the target distribution unit, means for selecting, by the target distributed unit, a bandwidth part identifier, multiple transmit and receive points beam indications, and an identifier for the beam indication for the first transmission or reception with the target distributed unit after the cell switch; and
   means for sending, by the target distribution unit, the bandwidth part identifier, multiple transmit and receive points beam indications, and a beam indication for the first transmission or reception from the target distributed unit after the cell switch to a source distributed unit via a control unit to enable a cell change to the target distribution unit with multiple transmit and receive points operation for the user equipment.
42. An apparatus comprising:
   means for receiving, by a control unit, a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
   means for generating, by the control unit, a radio resource control reconfiguration message comprising measurement reporting configuration comprising the channel state information resource configuration for group based beam reporting of multiple transmit and receive points for the target distributed unit and at least one bandwidth part configuration for at least one transmit and receive point at the target distribution unit;
   means for sending, by the control unit, the radio resource control reconfiguration message towards the user equipment;
   in response to receiving a beam report that is sent after a decision to switch to the target distribution unit, means for selecting, by the control unit, a multiple transmit and receive point configuration comprising at least of bandwidth part identifier, multiple transmit and receive points beam indications, and an identifier for the beam indication for the first transmission or reception with the target distributed unit after the cell switch;
   means for sharing, by the control unit, the selected multiple transmit and receive point configuration with the target distributed unit; and
   in response to confirmation of the selected multiple transmit and receive point configuration by the target distributed unit, means for sending, by the control unit, the selected multiple transmit and receive point configuration parameters to the user equipment via a source distributed unit to enable a cell change to the target distribution unit with multiple transmit and receive points operation.
43. An apparatus comprising:
   means for receiving, by a user equipment and from the source distributed unit, a cell switch comprising a bandwidth part identifier and multiple transmit and receive points beam indications comprising multiple transmission configuration index states or reference signal identifiers associated with the multiple transmit and receive points at a target cell; and
   means for determining, by the user equipment, a first transmission configuration index state or a first reference signal identifier in the beam indications of the target cell, wherein the first transmission configuration index state or a first quasi co-located source reference signal is used for the first transmission or reception with the target cell, and the second transmission configuration index state or a second reference signal identifier in the beam indication of the target cell indicates the second transmission configuration index state or the second quasi co-located source reference signal are used for second transmission.
   The apparatus of paragraph 43 further comprising means for performing any of the functions recited in paragraphs 14-15.

## Claims

1. A source distributed unit comprising:
at least one processor;
at least one memory including program code which when executed by the at least one processor causes the apparatus to at least:
receive a configuration for a target distributed unit, wherein the configuration comprises at least one bandwidth part configuration for at least one transmit and receive point at the targeted distributed unit and a channel state information resource configuration of multiple transmit and receive points;
in response to receiving a layer 1 measurement report for the target distributed unit, decide to switch to the target distributed unit with a multiple transmit and receive points operation; and
send a cell switch command to a user equipment to change to the target distributed using a multiple transmit and receive points operation, the cell switch command including a bandwidth part identifier and multiple transmit and receive points beam indications.

2. The source distributed unit of claim 1, wherein the channel state information resource configuration of multiple transmit and receive points comprises a configuration of group based beam reporting.

3. The source distributed unit of any of claims 1-2, wherein the layer 1 measurement report for the target distributed unit comprises group based beam reporting.

4. The source distributed unit of any of claims 1-3, wherein the configuration is received, from the target distributed unit and/or a control unit, with one or more conditions for selection of the at least one bandwidth part configuration.

5. The source distributed unit of any of claims 1-4, wherein the apparatus, in response to receiving the layer 1 measurement report comprising group based beam reporting for the target distributed unit, selects the bandwidth part configuration for the multiple transmit and receive points and determines multiple transmit and receive points beam indications comprising multiple transmission configuration index states or reference signal identifiers associated with the multiple transmit and receive points at the target distributed unit, and then sends to the user equipment the cell switch command comprising the selected bandwidth part configuration and the determined multiple transmit and receive points beam indications.

6. The source distributed unit of any of claims 1-5, wherein the beam indications are sent by indicating a beam group received in the layer 1 measurement report.

7. The source distributed unit of any of claims 1-6, wherein the apparatus is further caused to in response to the deciding to switch to the target distribution unit, send at least a portion of the layer 1 measurement report to the target distributed unit and/or a control unit; receive the bandwidth part identifier and the multiple transmit and receive points beam indications; and forward the bandwidth part identifier and the multiple transmit and receive points beam indications to the user equipment.

8. The source distributed unit of any of claims 1-7, wherein the cell switch command comprises an indication regarding whether there is one or multiple transmission configuration index states in the cell switch command.

9. The source distributed unit of any of claims 1-8, wherein the cell switch command comprises identifiers of the at least one beam indication from the multiple transmit and receive points beam indications for the at least one transmission or reception with the target distributed unit upon the cell switch.

10. The source distributed unit of any of claims 1-9, wherein the apparatus is further caused to receive the configuration for the target distributed unit, wherein the configuration comprises at least the one bandwidth part configuration for the at least one transmit and receive point; select a multiple transmit and receive point configuration comprising at least the bandwidth part identifier, the multiple transmit and receive points beam indications, and an identifier for the beam indication for the first transmission or reception with the target distributed unit after the cell switch, which is in response to receiving a layer 1 measurement report; share the selected multiple transmit and receive point configuration with the target distributed unit; and in response to confirmation of the selected multiple transmit and receive point configuration by the target distributed unit, send the selected multiple transmit and receive point configuration to the user equipment.

11. A target distributed unit comprising:
at least one processor;
at least one memory including program code which when executed by the at least one processor causes the apparatus to at least:
send a context setup for a user equipment, wherein the context setup includes at least one bandwidth part configuration for at least one transmit and receive point at the apparatus and a channel state information resource configuration for group based beam reporting of multiple transmit and receive points for the apparatus;
receive a beam report from the source distributed unit via a control unit, that is sent after a decision to switch to the target distribution unit;
in response to receiving the beam report that is sent after the decision to switch to the target distribution unit, select a bandwidth part identifier, multiple transmit and receive points beam indications, and an identifier for the beam indication for the first transmission or reception with the apparatus after the cell switch; and
send the bandwidth part identifier, multiple transmit and receive points beam indications, and a beam indication for the first transmission or reception from the apparatus after the cell switch to a source distributed unit via a control unit to enable a cell change to the target distribution unit with multiple transmit and receive points operation for the user equipment.

12. A control unit comprising:
at least one processor;
at least one memory including program code which when executed by the at least one processor causes the apparatus to at least:
receive a context setup for a user equipment, wherein the context setup includes at least one bandwidth part configuration for at least one transmit and receive point at the target distributed unit and a channel state information resource configuration for group based beam reporting of multiple transmit and receive points for the target distributed unit;
generate a radio resource control reconfiguration message comprising measurement reporting configuration comprising the channel state information resource configuration for group based beam reporting of multiple transmit and receive points for the target distributed unit and at least one bandwidth part configuration for at least one transmit and receive point at the target distribution unit;
send the radio resource control reconfiguration message towards the user equipment;
in response to receiving a beam report that is sent after a decision to switch to the target distribution unit, select a multiple transmit and receive point configuration comprising at least of bandwidth part identifier, multiple transmit and receive points beam indications, and an identifier for the beam indication for the first transmission or reception with the target distributed unit after the cell switch;
share the selected multiple transmit and receive point configuration with the target distributed unit; and
in response to confirmation of the selected multiple transmit and receive point configuration by the target distributed unit, send the selected multiple transmit and receive point configuration parameters to the user equipment via a source distributed unit to enable a cell change to the target distribution unit with multiple transmit and receive points operation.

13. A user equipment comprising:
at least one processor;
at least one memory including program code which when executed by the at least one processor causes the apparatus to at least:
receive, from the source distributed unit, a cell switch comprising a bandwidth part identifier and multiple transmit and receive points beam indications comprising multiple transmission configuration index states or reference signal identifiers associated with the multiple transmit and receive points at a target cell; and
determine a first transmission configuration index state or a first reference signal identifier in the beam indications of the target cell, wherein the first transmission configuration index state or a first quasi co-located source reference signal is used for the first transmission or reception with the target cell, and the second transmission configuration index state or a second reference signal identifier in the beam indication of the target cell indicates the second transmission configuration index state or the second quasi co-located source reference signal are used for second transmission or reception with the target cell.

14. The user equipment of claim 13, wherein the apparatus is further caused to at least receive, in the cell switch command, identifiers of the beam indications from the multiple transmit and receive points beam indications; and based on the identifiers of the beam indications from the multiple transmit and receive points beam indications in the cell switch command, determine the beam indications for at least one transmission or reception with the target distributed unit upon the cell switch.

15. The user equipment of any of claims 13-14, wherein the apparatus is further caused to at least select the at least one beam indication from the multiple transmit and receive points beam indications provided in the cell switch command, for at least one transmission or reception with the target cell based on reported layer 1 measurements.
